# EUROPEAN PATENT SPECIFICATION

(11) **EP 3 806 353 B1**
(45) Date of publication and mention of the grant of the patent: **23.11.2022**
(21) Application number: 19202280.4
(22) Date of filing: 09.10.2019
(51) Int. Cl.: H04B 17/00

(54) **METHOD AND TEST SYSTEM FOR DETERMINING THE DEVICE UNDER TEST ANTENNA FREQUENCY BAND RELATION**
VERFAHREN UND TESTSYSTEM ZUR BESTIMMUNG DER ANTENNENFREQUENZBANDBEZIEHUNG EINER ZU PRÜFENDEN VORRICHTUNG
PROCÉDÉ ET SYSTÈME DE TEST POUR DÉTERMINER LA RELATION DE BANDE DE FRÉQUENCE D'ANTENNE DU DISPOSITIF SOUS TEST

(43) Date of publication of application: 14.04.2021
(73) Proprietor: Rohde & Schwarz GmbH & Co. KG, 81671 München (DE)
(72) Inventor: Steffan, Byron, 81671 München (DE)
(74) Representative: Prinz & Partner mbB

(56) References cited:
- CN-A- 107 994 962
- US-A1- 2014 242 919
- HUAWEI: "Flexible CA/MIMO configuration and related CA/MIMO capabilities information report", 3GPP DRAFT; R4-102612, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Bratislava; 20100628, 24 June 2010 (2010-06-24), XP050454752, [retrieved on 2010-06-24]

## Description

The invention relates to a method of determining the device under test antenna frequency band relation of a device under test. Further, the invention relates to a test system for determining the device under test antenna frequency band relation of a device under test.

Modern communication devices using new telecommunication standards for transmitting data typically use Multiple Input Multiple Output (MIMO) techniques in order to multiply the capacity of a communication link. Accordingly, the communication devices used for MIMO communication typically comprise multiple transmission antennas and multiple receiving antennas.

US 2014/242919 A1 shows a method based on LTE-Advanced system used for testing a device under test, wherein test signals are generated based on settings stored in the test system.

CN 107 994 962 A describe a method of radio frequency testing wherein an intelligent terminal is used for testing a device under test. The intelligent terminal however generates test signals based on information stored previously.

For configuring the antenna frequency band relation of the respective communication device, a user has to consider a data sheet of the communication device in order to configure the communication device in an appropriate manner, particularly the relation of the respective antennas with respect to the frequency bands supported by the device under test.

However, it has turned out that the data sheet is not always available for the user such that the user is not able to configure the communication device in an appropriate manner.

Therefore, there is a need for a possibility to ensure proper configuration of the device even though the respective data sheet is not available.

The invention provides a method of determining a device under test antenna frequency band relation of a device under test, comprising the following steps:
- Performing an attach procedure between the device under test and a test system,
- Asking, by means of the test system, the device under test for at least one frequency band supported by the device under test,
- Submitting, by means of the device under test, the at least one frequency band supported to the test system, and
- Performing a signalling test and/or a transmitter and/or receiver test for each antenna of the device under test and for each frequency band supported.

The device under test antenna frequency band relation corresponds to the number of frequency bands supported by the device under test and/or the assignment of the frequency bands supported to the antennas of the device under test.

The invention is based on the finding that the device under test antenna frequency band relation can be configured in an efficient and easy manner by exchanging information with respect to the frequency bands supported by the device under test and performing a respective test subsequently in order to verify the information exchanged. In fact, the device under test may communicate frequency bands as being supported that are not supported in reality due to a misconfiguration of the device under test. This might happen in case of a prototype being used as device under test.

In general, the device under test relates to a communication device that may be configured for MIMO communication purposes.

For exchanging the respective information concerning the at least one frequency band supported, the test system may request from the device under test to submit the frequency band(s) supported by the device under test. In response, the device under test submits (upon request) the at least one frequency band supported to the test system. Hence, the information concerning the at least one frequency band supported is exchanged between the device under test and the test system such that testing the respective frequency band may be performed.

Requesting the at least one frequency band supported may relate to enquiring capability of the device under test, wherein submitting the at least one frequency band supported may relate to submitting the respective capability information of the device under test.

Put differently, the information concerning the at least one frequency band supported may be submitted simultaneously with information concerning the capability and/or access technologies.

In fact, the number of frequency bands used for performing the respective test is reduced, namely the signalling test and/or the transmitter/receiver test (TX/RX test). The number of frequency bands is reduced since only the frequency bands submitted by the device under test may be tested individually.

The respective test performed corresponds to a measurement procedure that is assigned to the specific type of test performed. Generally, the respective test may relate to certain measurement procedures that are performed in a certain order.

The device under test antenna frequency band relation can be determined automatically. Particularly, the device under test antenna frequency band relation is determined by means of the test system in an automatic manner.

In summary, the invention relates to (requesting and) submitting supported frequency bands of all antennas of the device under test and subsequent testing each antenna for the (alleged) supported frequency bands individually. The respective testing may relate to a signalling test and/or a TX/RX test.

The frequency bands may relate to at least one specific telecommunication standard or telecommunication technique. This means that the device under test submits (upon request by the test system) the frequency bands that are supported by the device under test. The different frequency bands may relate to a telecommunication standard such as Long-Term Evolution (LTE), 5G, Global System for Mobile Communications (GSM) or Universal Mobile Telecommunications System (UMTS) and so on. Further, the specific frequency bands may also relate to a certain telecommunication technique, for instance Wideband Code Division Multiple Access (WCDMA) techniques typically used in UMTS.

In fact, the device under test may also submit the assignment of the frequency bands supported to the antennas of the device under test. In other words, the device under test may also submit which of its antennas supports which frequency band.

Generally, the different antennas of the device under test do not support every frequency band supported by the entire device under test. Moreover, the different antennas of the device under test do not support every direction, namely the transmitting direction (TX direction) and the receiving direction (RX direction), for the respective frequency band.

This, however, can be verified by performing the respective test, namely the signalling test and/or the TX/RX test for each antenna and for each frequency band supported by the device under test. Thus, it is verified whether or not the respective antenna of the device under test supports the specific frequency band as well as the respective direction assigned to the frequency band.

The individual antennas of the device under test are controlled or rather switched individually for performing the individual tests for each antenna of the device under test.

Another aspect provides that, in a subsequent manner, the test system simulates a cell, particularly a mobile radio cell, for different frequency bands routed on all antennas of the device under test until the device under test attaches with the test system. The attach procedure may be performed as mentioned above by simulating a cell with a first frequency band that is routed on all antennas in a subsequent manner. Hence, the first frequency band is routed on a first antenna. If no attaching takes place, the first frequency band is routed on a second antenna and so on. If no attaching takes place for any antenna, a cell with a second frequency band is simulated that is routed on all antennas of the device under test in a subsequent manner again. If an attaching does not take place for the cell with a second frequency band, the procedure is repeated for further different frequency bands supported in a subsequent manner.

Alternatively, a first antenna of the device under test is selected that is routed with cells for different frequency bands in a subsequent manner. This means that a cell for a first frequency band is routed on the first antenna. If no attaching takes place, a cell for a second frequency band is routed on the first antenna afterwards. If still no attaching takes place, the frequency band is further altered and routed on the first antenna. If no attaching takes place for any of the frequency bands used, the second antenna is taken into account wherein again all frequency bands are routed on in a subsequent manner.

Particularly, a respective antenna of the device under test, which is used for attaching the device under test with a test system, is registered for supporting transmission and reception of the respective frequency band used. Thus, the antenna selected as well as the frequency band selected during the successful attaching ensures that the respective antenna supports transmission and reception, namely both directions, for the respective frequency band used.

According to another aspect, the test system also asks for supported Multiple Input Multiple Output (MIMO) schemes and/or carrier aggregation schemes of the device under test. The MIMO schemes may be also tested by stimulating another reception signal (RX signal) for all other antennas (except for the respective antenna used for successful attaching) in order to verify another antenna of the device under test that supports the respective frequency band in reception direction (RX direction). By doing so, it can be verified which MIMO scheme for the respective frequency band is supported, for instance a 4x4 MIMO scheme in case of four antennas. Furthermore, the order of the antennas in the respective MIMO scheme can be verified appropriately.

In addition, carrier aggregation schemes can be verified by performing the respective test for each antenna of the device under test and for each frequency band supported. Generally, the carrier aggregation is done in order to increase the data rate by assigning multiple frequency blocks to the same device (user). The carrier aggregation schemes may relate to intra-band aggregation, particularly contiguous component carriers or rather non-contiguous component carriers, as well as inter-band aggregation.

According to another aspect, the attached procedure is performed in a reference band or by a brute-force approach if no reference band is known. During the brute-force approach, all supported frequency bands are taken into account one after the other in order to perform the attach procedure (as described above).The reference band relates to a fitting band that is a frequency band where it is likely that the device under test supports the respective frequency band. The reference band is a pre-known frequency band of the device under test. If such a reference band is not known, a brute-force approach is used.

Furthermore, a detach procedure may be performed. The detach procedure may take place after submitting the at least one frequency band supported. Hence, the respective information concerning the at least one frequency band supported is exchanged after completion of the attach procedure and prior to the detach procedure. After submitting the supported frequency band(s) of the device under test, the respective test may be performed. Hence, the test may be performed after the detach procedure was done.

The device under test may be connected with the test system via a cable connection or wireless when submitting the at least one frequency band supported to the test system. Hence, the attach procedure (as well as the detach procedure) may be performed over-the-air (OTA). The attach procedure (as well as the detach procedure) may also be performed in a wired manner. However, the respective test, namely the signalling test and/or the TX/RX test, may be done by means of a cable connection.

According to another aspect, a user is enabled to adapt the at least one frequency band supported that was submitted to the test system. Hence, the user is enabled to overwrite the frequency bands supported which were submitted previously by the device under test. This means that the user is enabled to add and/or remove frequency bands. In fact, the device under test may submit false frequency bands that can be removed by the user manually. In a similar manner, the user is enabled to add frequency bands not submitted by the device under test. Furthermore, the user is generally enabled to adapt the device under test antenna frequency band relation of the device under test manually if necessary. Hence, the user may adapt the assignment of the frequency bands to the respective antennas of the device under test.

Particularly, the test system provides a user interface via which the user is enabled to interact with a test system. The user interface may relate to a graphical user interface that is displayed on a display of the test system.

Furthermore, the invention provides a test system for determining a device under test antenna frequency band relation of a device under test, wherein the test system is configured to perform the method described above. Accordingly, a test system is provided for determining a device under test antenna frequency band relation of a device under test, wherein the test system is configured to perform an attach procedure between the device under test and the test system, wherein the test system is configured to ask the device under test for at least one frequency band supported by the device under test, wherein the test system is configured to receive from the device under test the at least one frequency band supported, and wherein the test system is configured to perform a signaling test and/or a transmitter and/or receiver test for each antenna of the device under test and for each frequency band supported, wherein the device under test antenna frequency band relation corresponds to the number of frequency bands supported by the device under test and/or the assignment of the frequency bands supported to the antennas of the device under test Therefore, the advantages and characteristics mentioned above also apply to the test system in a similar manner.

Moreover, the test system may comprise a display and at least one interface for the device under test. The display may be used to provide the respective information to the user of the test system that was gathered during the method of determining the device under test antenna frequency band relation of the device under test. The at least one interface for the device under test may be used to enable the test system to perform the attach procedure with a device under test. Accordingly, the at least one interface for the device under test can be established by an antenna or rather a connector.

The test system may also comprise at least one processor that is configured to generate a graphical user interface that is displayed on the display. The graphical user interface allows the user to interact with a test system in order to make settings of the test system and/or to adapt certain settings, for instance the respective assignment of the frequency bands supported with the antennas of the device under test.

Furthermore, the at least one interface for the device under test may correspond to an uplink antenna, a downlink antenna, an uplink connector and/or a downlink connector. This substantially depends on the type of connection used for connecting the device under test with the test system.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a test setup comprising a test system according to the invention that is configured to perform a method of determining a device under test antenna frequency band relation of a device under test according to the invention,
- Figure 2 schematically shows a flow chart of the method according to the invention, and
- Figure 3 a schematic overview of a graphical user interface provided by a test system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

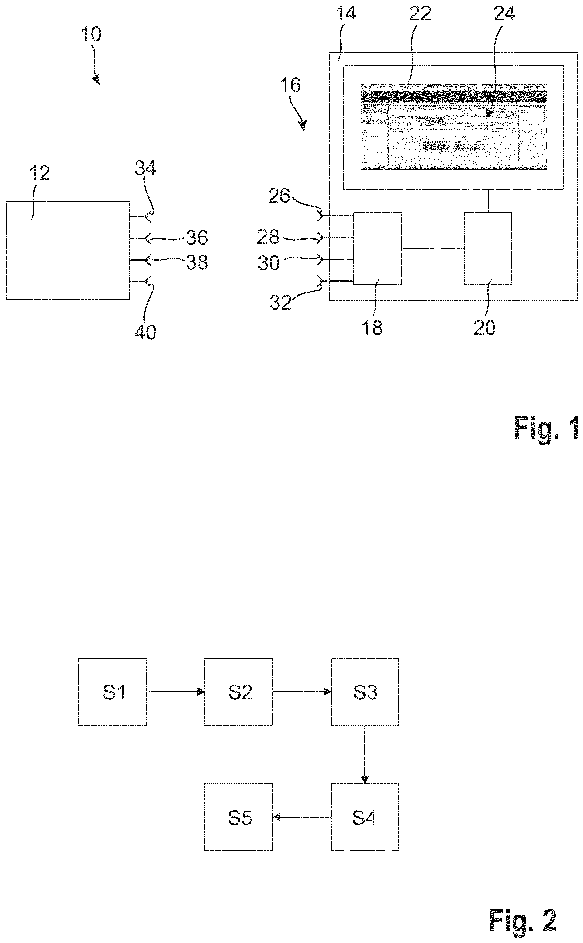

In Figure 1, a test setup 10 is shown that comprises a device under test 12 and a test system 14.

In the shown embodiment, the test system 14 comprises four interfaces 16 for the device under test 12, a measurement module 18 connected with the interfaces 16, a processor 20 connected with a measurement module 18 as well as a display 22 that is connected with a processor 20.

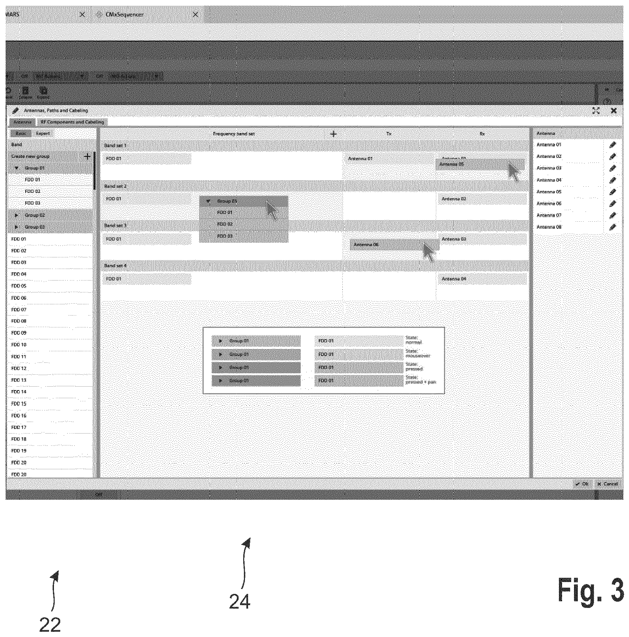

The processor 20 is generally configured to generate a graphical user interface 24 that is displayed on the display 22. A representative graphical user interface 24 is shown in Figure 3 in more detail.

In the shown embodiment, the interfaces 16 of the test system 14 are established by a first antenna 26, a second antenna 28, a third antenna 30 and a fourth antenna 32. The respective antennas 26 - 32 may relate to downlink and/or uplink antennas. Particularly, a single antenna may be enabled for transmission and reception (TX/RX). Alternatively, the interfaces 16 of the test system 14 may relate to uplink and/or downlink connector(s).

In a similar manner, the device under test 12 comprises four antennas 34 - 40 that may relate to downlink and/or uplink antennas. Particularly, a single antenna may be enabled for transmission and reception (TX/RX). Moreover, the device under test 12 may have at least one downlink and/or uplink connector.

In general, the test setup 10 shown in Figure 1 is used to automatically determine a device under test antenna frequency band relation of the device under test 12 by means of the test system 14. This will be described hereinafter while also taking Figure 2 into account showing a flow chart of a method of determining the device under test antenna frequency band relation of the device under test 12.

In a first step S1, an attach procedure between the device under test 12 and the test system 14 is performed. This can be done over-the-air (OTA) via the respective antennas 26 - 40.

While performing the attach procedure, the test system 14 may simulate a cell for different frequency bands routed on all antennas 34-40 of the device under test 12 until the device under test 12 attaches with the test system 14.

Once the attaching has been completed successfully, the respective antenna 34-40 of the device under test 12 used during the successful attaching is registered for the respective frequency band used during the successful attaching as supporting transmission (TX) and reception (RX), namely both directions, for the respective frequency band.

This concept may be designated as a brute-force approach since all frequency bands are (randomly) tested on all antennas for the attach procedure in a subsequent manner.

However, the attach procedure may also be performed in a reference band already known. The reference band relates to a fitting band that is a frequency band that shall be supported by the device under test.

However, if no reference band is known, the brute-force approach may be applied according to which different frequency bands are tested in a subsequent manner in order to identify a respective frequency band that allows the attach procedure.

After completion of the attach procedure, the test system 14 may also ask for supported Multiple Input Multiple Output schemes and/or carrier aggregation schemes of the device under test 12.

This may be done by stimulating a further reception signal (RX signal) for each other antenna 34-40 of the device under test 12 except for the antenna 34-40 via which the attach procedure was successful in order to verify if another antenna 34-40 of the device under test 12 supports the respective frequency band used during the successful attach procedure in reception direction (RX direction).

In a second step S2, the device under test 12 is asked by means of the test system 14 for at least one frequency band supported by the device under test 12. Put differently, the test system 14 request certain information from the device under test 12 by transmitting the respective request that is processed by the device under test 12. The information requested corresponds to the at least one frequency band supported by the device under test 12.

Accordingly, it is actively asked for the respective frequency bands supported by the device under test 12.

In a third step S3, the at least one frequency band supported by the device under test 12 is submitted to the test system 14. Hence, the device under test 12 submits the information concerning at least one frequency band supported to the test system 14 (upon request).

In a fourth step S4, a detach procedure may be performed. The detach procedure may be initiated by the test system 14.

In a fifth step S5, a signalling test and/or a transmitter and/or receiver test (TX/RX test) is performed for each antenna 34-40 of the device under test 12 as well as for each frequency band supported.

The frequency bands previously submitted by the device under test 12 (upon request) are used for performing the respective test. Thus, the number of frequency bands used for performing the respective test (s) is reduced, as only the submitted frequency bands are tested for each antenna 34-40 of the device under test 12 individually.

Put differently, the respective test (s) performed are/is used to identify which of the several antennas 34-40 of the device under test 12 can be used for the respective frequency band supported by the device under test 12 for transmission direction (TX) and/or reception direction (RX).

This can be measured by means of the measurement module 18 that forwards the measurement result(s) to the processor 20 for further processing.

The respective result(s) of the test performed are/is processed by the processor 20 so as to generate the graphical user interface 24 that is displayed on the display 22.

As shown in Figure 3, the graphical user interface 24 comprises representations of the at least one frequency band supported by the device under test 12 and at least one antenna 34-40 of the device under test 12.

Via the graphical user interface 24, the user of the test system 14 is enabled to adapt the at least one frequency band supported and displayed in the graphical user interface 24. This means that the user may overwrite and/or remove at least one frequency band.

Furthermore, the user may be enabled to adapt the assignment of the frequency band(s) supported to certain antenna(s) 34-40 of the device under test 12.

The test system 14 may be generally established by a test and/or measurement device, namely a device having a housing encompassing the respective components such as the measurement module 18 and the processor 20.

Thus, a method as well as a test system 14 are provided that ensure automatic determination of the device under test antenna frequency band relation which corresponds to the number of frequency bands supported by the device under test 14.

## Claims

1. A method of determining a device under test antenna frequency band relation of a device under test (12), comprising the following steps:
- Performing an attach procedure between the device under test (12) and a test system (14),
- Asking, by means of the test system (14), the device under test (12) for at least one frequency band supported by the device under test (12),
- Submitting, by means of the device under test (12), the at least one frequency band supported to the test system (14), and
- Performing a signaling test and/or a transmitter and/or receiver test for each antenna of the device under test (12) and for each frequency band supported,
wherein the device under test antenna frequency band relation corresponds to the number of frequency bands supported by the device under test (12) and/or the assignment of the frequency bands supported to the antennas of the device under test (12).

2. The method according to claim 1, wherein, in a subsequent manner, the test system (14) simulates a cell for different frequency bands routed on all antennas of the device under test (12) until the device under test (12) attaches with the test system (14).

3. The method according to any of the preceding claims, wherein a respective antenna of the device under test (12), which is used for attaching the device under test (12) with the test system (14), is registered for supporting transmission and reception of the respective frequency band used.

4. The method according to any of the preceding claims, wherein the test system (14) also asks for supported Multiple Input Multiple Output schemes and/or carrier aggregation schemes of the device under test (12).

5. The method according to any of the preceding claims, wherein the attach procedure is performed in a reference band or by a brute force approach if no reference band is known, wherein, during the brute force approach, all supported frequency bands are taken into account one after the other in order to perform the attach procedure.

6. The method according to any of the preceding claims, wherein a detach procedure is performed.

7. The method according to any of the preceding claims, wherein the device under test (12) is connected with the test system (14) via a cable connection or wireless when submitting the at least one frequency band supported to the test system (14).

8. The method according to any of the preceding claims, wherein a user is enabled to adapt the at least one frequency band supported that was submitted to the test system (14) such that the user is enabled to overwrite the at least one frequency band supported which was submitted previously by the device under test (12), thereby enabling the user to add and/or remove frequency bands.

9. A test system (14) for determining a device under test antenna frequency band relation of a device under test (12), wherein the test system (14) is configured to perform an attach procedure between the device under test (12) and the test system (14), wherein the test system (14) is configured to ask the device under test (12) for at least one frequency band supported by the device under test (12), wherein the test system (14) is configured to receive from the device under test (12) the at least one frequency band supported, and wherein the test system (14) is configured to perform a signaling test and/or a transmitter and/or receiver test for each antenna of the device under test (12) and for each frequency band supported, wherein the device under test antenna frequency band relation corresponds to the number of frequency bands supported by the device under test (12) and/or the assignment of the frequency bands supported to the antennas of the device under test (12).

10. The test system (14) according to claim 9, wherein the test system (14) comprises a display (22) and at least one interface (16) for the device under test (12).

11. The test system (14) according to claim 10, wherein the test system (14) comprises at least one processor (20) that is configured to generate a graphical user interface (24) that is displayed on the display (22).

12. The test system (14) according to claim 10 or 11, wherein the at least one interface (16) for the device under test (12) corresponds to an uplink antenna (26), a downlink antenna (28), an uplink connector (30) and/or a downlink connector (32).

13. The test system (14) according to any of claims 9 to 12, wherein the test system (14) provides a user interface (24) via which the user is enabled to interact with the test system (14).

## Patentansprüche

1. Verfahren zum Bestimmen einer Antennenfrequenzbandbeziehung einer zu testenden Vorrichtung (12), das die folgenden Schritte umfasst:
- Durchführen einer Anbindungsprozedur zwischen der zu testenden Vorrichtung (12) und einem Testsystem (14),
- Erfragen von mindestens einem Frequenzband, das von der zu testenden Vorrichtung (12) unterstützt wird, durch das Testsystem (14) bei der zu testenden Vorrichtung (12),
- Übergeben des mindestens einen Frequenzbands, das vom Testsystem (14) unterstützt wird, durch die zu testende Vorrichtung (12), und
- Durchführen eines Signalisierungstests und/oder eines Sender- und/oder eines Empfängertests für jede Antenne der zu testenden Vorrichtung (12) und für jedes unterstützte Frequenzband,
wobei die Antennenfrequenzbandbeziehung der zu testenden Vorrichtung der Anzahl von Frequenzbändern, die von der zu testenden Vorrichtung (12) unterstützt werden, und/oder der Zuweisung der unterstützten Frequenzbänder, zu den Antennen der zu testenden Vorrichtung (12) entspricht.

2. Verfahren nach Anspruch 1, wobei das Testsystem (14) in einer nachfolgenden Weise eine Zelle für verschiedene Frequenzbänder simuliert, die auf allen Antennen der zu testenden Vorrichtung (12) geroutet werden, bis sich die zu testende Vorrichtung (12) an das Testsystem (14) anbindet.

3. Verfahren nach einem der vorhergehenden Ansprüche, wobei eine jeweilige Antenne der zu testenden Vorrichtung (12), die zum Anbinden der zu testenden Vorrichtung (12) an das Testsystem (14) verwendet wird, zum Unterstützen einer Übertragung und eines Empfangs des jeweiligen verwendeten Frequenzbands registriert wird.

4. Verfahren nach einem der vorhergehenden Ansprüche, wobei das Testsystem (14) außerdem unterstützte Multiple-Input-Multiple-Output-Schemata und/oder Trägeraggregationsschemata der zu testenden Vorrichtung (12) erfragt.

5. Verfahren nach einem der vorhergehenden Ansprüche, wobei die Anbindungsprozedur in einem Referenzband durchgeführt wird oder mittels eines Ansatzes der rohen Gewalt, wenn kein Referenzband bekannt ist, wobei während des Ansatzes der rohen Gewalt alle unterstützten Frequenzbänder nacheinander berücksichtigt werden, um die Anbindungsprozedur durchzuführen.

6. Verfahren nach einem der vorhergehenden Ansprüche, wobei eine Löseprozedur durchgeführt wird.

7. Verfahren nach einem der vorhergehenden Ansprüche, wobei die zu testende Vorrichtung (12) beim Übergeben des mindestens einen unterstützten Frequenzbands an das Testsystem (14) via eine Kabelverbindung oder drahtlos mit dem Testsystem (14) verbunden ist.

8. Verfahren nach einem der vorhergehenden Ansprüche, wobei ein Benutzer in der Lage ist, das mindestens eine unterstützte Frequenzband, das an das Testsystem (14) übergeben wurde, derart anzupassen, dass der Benutzer in der Lage ist, das mindestens eine unterstützte Frequenzband, das zuvor von der zu testenden Vorrichtung (12) übergeben wurde, zu überschreiben, wodurch der Benutzer in der Lage ist, Frequenzbänder hinzuzufügen und/oder zu entfernen.

9. Testsystem (14) zum Bestimmen einer Antennenfrequenzbandbeziehung einer zu testenden Vorrichtung (12), wobei das Testsystem (14) dazu ausgelegt ist, eine Anbindungsprozedur zwischen der zu testenden Vorrichtung (12) und dem Testsystem (14) durchzuführen, wobei das Testsystem (14) dazu ausgelegt ist, mindestens ein Frequenzband, das von der zu testenden Vorrichtung (12) unterstützt wird, bei der zu testenden Vorrichtung (12) zu erfragen, wobei das Testsystem (14) dazu ausgelegt ist, das mindestens eine unterstützte Frequenzband von der zu testenden Vorrichtung (12) zu empfangen, und wobei das Testsystem (14) dazu ausgelegt ist, einen Signalisierungstest und/oder einen Sender- und/oder einen Empfängertest für jede Antenne der zu testenden Vorrichtung (12) und für jedes unterstützte Frequenzband durchzuführen, wobei die Antennenfrequenzbandbeziehung der zu testenden Vorrichtung der Anzahl von Frequenzbändern, die von der zu testenden Vorrichtung (12) unterstützt werden, und/oder der Zuweisung der unterstützten Frequenzbänder zu den Antennen der zu testenden Vorrichtung (12) entspricht.

10. Testsystem (14) nach Anspruch 9, wobei das Testsystem (14) eine Anzeige (22) und mindestens eine Schnittstelle (16) für die zu testende Vorrichtung (12) umfasst.

11. Testsystem (14) nach Anspruch 10, wobei das Testsystem (14) mindestens einen Prozessor (20) umfasst, der dazu ausgelegt ist, eine grafische Benutzerschnittstelle (24) zu erzeugen, die auf der Anzeige (22) angezeigt wird.

12. Testsystem (14) nach Anspruch 10 oder 11, wobei die mindestens eine Schnittstelle (16) für die zu testende Vorrichtung (12) einer Uplinkantenne (26), einer Downlinkantenne (28), einem Uplinkverbinder (30) und/oder einem Downlinkverbinder (32) entspricht.

13. Testsystem (14) nach einem der Ansprüche 9 bis 12, wobei das Testsystem (14) eine Benutzerschnittstelle (24) bereitstellt, via die der Benutzer in der Lage ist, mit dem Testsystem (14) zu interagieren.

## Revendications

1. Procédé pour déterminer une relation de bande de fréquence d'antenne de dispositif à l'essai d'un dispositif à l'essai (12), comprenant les étapes suivantes :
- réaliser une procédure de rattachement entre le dispositif à l'essai (12) et un système à l'essai (14),
- demander, au moyen du système à l'essai (14), au dispositif à l'essai (12) au moins une bande de fréquence prise en charge par le dispositif à l'essai (12),
- soumettre, au moyen du dispositif à l'essai (12), l'au moins une bande de fréquence prise en charge au système à l'essai (14), et
- réaliser un test de signalisation et/ou un test d'émetteur et/ou de récepteur pour chaque antenne du dispositif à l'essai (12) et pour chaque bande de fréquence prise en charge,
dans lequel la relation de bande de fréquence d'antenne de dispositif à l'essai correspond au nombre de bandes de fréquences prises en charge par le dispositif à l'essai (12) et/ou à l'attribution des bandes de fréquences prises en charge aux antennes du dispositif à l'essai (12).

2. Procédé selon la revendication 1, dans lequel, de manière subséquente, le système à l'essai (14) simule une cellule pour différentes bandes de fréquences acheminées sur toutes les antennes du dispositif à l'essai (12) jusqu'à ce que le dispositif à l'essai (12) se rattache au système à l'essai (14).

3. Procédé selon l'une quelconque des revendications précédentes, dans lequel une antenne respective du dispositif à l'essai (12), qui est utilisée pour rattacher le dispositif à l'essai (12) au système à l'essai (14), est enregistrée pour prendre en charge l'émission et la réception de la bande de fréquence respective utilisée.

4. Procédé selon l'une quelconque des revendications précédentes, dans lequel le système à l'essai (14) demande également des schémas entrée multiple sortie multiple et/ou des schémas d'agrégation de porteuses pris en charge du dispositif à l'essai (12).

5. Procédé selon l'une quelconque des revendications précédentes, dans lequel la procédure de rattachement est réalisée dans une bande de référence ou par une approche par force brute si aucune bande de référence n'est connue, dans lequel lors de l'approche par force brute, toutes les bandes de fréquences prises en charge sont prises en compte les unes après les autres afin de réaliser la procédure de rattachement.

6. Procédé selon l'une quelconque des revendications précédentes, dans lequel une procédure de détachement est réalisée.

7. Procédé selon l'une quelconque des revendications précédentes, dans lequel le dispositif à l'essai (12) est connecté au système à l'essai (14) via une connexion par câble ou sans fil lors de la soumission de l'au moins une bande de fréquence prise en charge au système à l'essai (14).

8. Procédé selon l'une quelconque des revendications précédentes, dans lequel un utilisateur est autorisé à adapter l'au moins une bande de fréquence prise en charge qui a été soumise au système à l'essai (14) de sorte que l'utilisateur soit autorisé à écraser l'au moins une bande de fréquence prise en charge qui a été soumise précédemment par le dispositif à l'essai (12), permettant ainsi à l'utilisateur d'ajouter et/ou de supprimer des bandes de fréquences.

9. Système à l'essai (14) pour déterminer une relation de bande de fréquence d'antenne de dispositif à l'essai d'un dispositif à l'essai (12), dans lequel le système à l'essai (14) est configuré pour réaliser une procédure de rattachement entre le dispositif à l'essai (12) et le système à l'essai (14), dans lequel le système à l'essai (14) est configuré pour demander au dispositif à l'essai (12) au moins une bande de fréquence prise en charge par le dispositif à l'essai (12), dans lequel le système à l'essai (14) est configuré pour recevoir du dispositif à l'essai (12) l'au moins une bande de fréquence prise en charge, et dans lequel le système à l'essai (14) est configuré pour réaliser un test de signalisation et/ou un test d'émetteur et/ou de récepteur pour chaque antenne du dispositif à l'essai (12) et pour chaque bande de fréquence prise en charge, dans lequel la relation de bande de fréquence d'antenne de dispositif à l'essai correspond au nombre de bandes de fréquences prises en charge par le dispositif à l'essai (12) et/ou à l'attribution des bandes de fréquences prises en charge aux antennes du dispositif à l'essai (12).

10. Système à l'essai (14) selon la revendication 9, dans lequel le système à l'essai (14) comprend un affichage (22) et au moins une interface (16) pour le dispositif à l'essai (12).

11. Système à l'essai (14) selon la revendication 10, dans lequel le système à l'essai (14) comprend au moins un processeur (20) qui est configuré pour générer une interface utilisateur graphique (24) qui est affichée sur l'affichage (22).

12. Système à l'essai (14) selon la revendication 10 ou 11, dans lequel l'au moins une interface (16) pour le dispositif à l'essai (12) correspond à une antenne de liaison montante (26), à une antenne de liaison descendante (28), à un connecteur de liaison montante (30) et/ou à un connecteur de liaison descendante (32).

13. Système à l'essai (14) selon l'une quelconque des revendications 9 à 12, dans lequel le système à l'essai (14) fournit une interface utilisateur (24) via laquelle l'utilisateur est autorisé à interagir avec le système à l'essai (14).
